# EUROPÄISCHE PATENTSCHRIFT

(11) **EP 1 562 799 B1**
(45) Veröffentlichungstag und Bekanntmachung des Hinweises auf die Patenterteilung: **11.10.2006**
(21) Anmeldenummer: 04790965.0
(22) Anmeldetag: 28.10.2004
(51) Int. Cl.: B60R 21/34

(54) **EINRICHTUNG ZUM REVERSIEREN EINER ZUM UNFALLSCHUTZ SENSORGESTEUERT AKTIV AUFGESTELLTEN FRONTHAUBE EINES KRAFTFAHRZEUGES**
DEVICE FOR REVERSING THE BONNET OF A MOTOR VEHICLE, WHICH HAS BEEN ACTIVELY RAISED BY MEANS OF SENSORS FOR ACCIDENT PROTECTION
DISPOSITIF POUR INVERSER LE MOUVEMENT DU CAPOT AVANT D'UN VEHICULE RELEVE PAR CAPTEURS POUR LA PROTECTION CONTRE LES ACCIDENTS

(30) Priorität: 08.11.2003 DE 10352275
(43) Veröffentlichungstag der Anmeldung: 17.08.2005
(73) Patentinhaber: ISE Innomotive Systems Europe GmbH, 51702 Bergneustadt (DE)
(72) Erfinder: LANG, Jozsef, H-1131 Budapest (HU); RÖHNER, Stephan, 44287 Dortmund (DE); HARTEBRODT, Raphael, 57489 Drolshagen (DE)
(74) Vertreter: Fuchs Mehler Weiss & Fritzsche
(86) Internationale Anmeldenummer: PCT/EP2004/012195
(87) Internationale Veröffentlichungsnummer: WO 2005/047069

(56) Entgegenhaltungen:
- DE-A1- 10 111 096
- US-A1- 2002 190 515
- US-B1- 6 293 362

## Beschreibung

Die Erfindung bezieht sich auf eine Einrichtung zum Reversieren der aufgestellten Fronthaube eines Kraftfahrzeuges nach dem Oberbegriff des Anspruchs 1.

Jährlich ereignen sich zahlreiche Unfälle, bei denen Fußgänger, seien es Kinder oder Erwachsene, bzw. Zweiradfahrer oder Skater, von einem Kraftfahrzeug angefahren, auf die Front- oder Motorhaube sowie gegen die Windschutzscheibe geschleudert werden, und dabei zumindest schwere Verletzungen erfahren. Dabei ist insbesondere der Kopf sowie der Oberkörper eines erwachsenen Fußgängers bzw. Zweiradfahrers gefährdet, da dieser bei einem Zusammenprall mit einem Kraftfahrzeug - wie Crash-Versuche und auch die Erfahrungen gezeigt haben -, etwa im hinteren, relativ hartem Bereich an der Fronthaube am Übergang zur Windschutzscheibe aufschlägt und dabei erheblich verletzt wird.

Aufgrund von entsprechenden Forderungen arbeitet die Fahrzeugindustrie intensiv an dem Problem, den Personenschutz insoweit zu verbessern.

Es sind eine Reihe von Möglichkeiten zur Lösung dieses Problems bekannt geworden. Ein Lösungsprinzip besteht darin, den vorgenannten harten Übergangsbereich zur Windschutzscheibe zu entschärfen, d. h. nachgiebiger zu gestalten, z.B. durch einen sensorgesteuert aufblasbaren Luftsack oder gemäß DE 28 14 107 A in Verbindung mit der DE 28 41 315 durch eine mittels eines Aufprall-Sensors betätigte Vorrichtung zur Verstellung der Fronthaube aus einer Ruheposition in eine demgegenüber angehobene, nachgiebige Aufprallposition, d. h. eine sogenannte "aktive Fronthaube". Dadurch, dass die Fronthaube bei der von dem Aufprall-Sensor erfassten Kollision mit einem Fußgänger in eine gegenüber ihrer Ruhe - d. h. Normalfallstellung angehobene Aufprallstellung nachgiebig verstellt wird, wird ein beim Brust- oder Kopfaufprall des Fußgängers im Sinne eines günstigeren Energieabbaues zur Wirkung kommender Deformationsweg der Fahrzeugkarosserie geschaffen, der für verringerte Kopf- und Brustverzögerungen und damit für geringere Verletzungsrisiken sorgt.

Die DE 197 12 961 A1 zeigt ebenfalls einen Aufprallschutz nach dem Prinzip der aktiven Fronthaube, deren windschutzscheibenseitige Scharnieranordnung über einen schwenkbar oder verschiebbar gelagerten Schamierträger so an der Karosserie des Vorderwagens befestigt ist, dass im Falle einer Kollision des Fahrzeuges mit einer Person die Fronthaube samt der Scharnieranordnung mittels einer an dem Scharnierträger angreifenden energiespeichernder Einrichtung, z. B. einem Feder-Kraftspeicher, nach oben verschwenkt bzw. verschoben, d. h. angehoben werden kann.

Neben diesen Lösungen zur aktiven Fronthaube mit windschutzscheibenseitiger Anhebung der Fronthaube über den Scharnierdrehanschlag, bei denen das vordere Haubenschloss im geschlossenen Zustand verbleibt, wodurch der Frontbereich der Fronthaube relativ steif und hart ist, was für den direkten ersten Kontakt zwischen dem Fahrzeug und der Unfallperson zu direkten Verletzungen führen kann, insbesondere im unteren Rumpfbereich der Unfallperson (Oberschenkel und Bauchbereich), sind gemäß der DE 197 21 565 A1 und DE 101 08 880 A1 auch Konstruktionen für das sensorgesteuerte Aufstellen der Fronthaube im vorderen, d.h. frontseitigen HaubenSchlossbereich bekannt geworden.

Die letztgenannte Schrift offenbart dabei auch den Gedanken, im Falle eines drohenden Unfalles die Fronthaube sowohl im Scharnierbereich als auch im Haubenschlossbereich aufzustellen.

Zum aktiven Aufstellen der Fronthaube dienen Aufstellelemente, die ein karosseriefest angebrachtes Unterteil und ein darin aufstellbar geführtes Hubelement in Verbindung mit einem Energiespeicher besitzen, der durch einen sensorgesteuerten Aktuator im Fall eines drohenden Unfalles auslösbar, ist und dabei das Hubelement mit der Fronthaube um einen vorgegebenen Arbeitshub aufstellt. Der Stand der Technik und Gegenstände von zahlreichen, noch nicht veröffentlichten älteren Anmeldungen der Patentanmelderin, zeigen eine Reihe von Konstruktionen für diese Aufstellelemente, die typischerweise als Energiespeicher einen Federspeicher in Form einer vorspannbaren Schraubenfeder-Anordnung besitzen.

Da es vorkommen kann, daß die Aufstellelemente ausgelöst werden, ohne daß es zu einem Aufprall einer Person kommt, sei es durch eine Fehlauslösung oder ein leichtes Anstoßen beim Parkieren an Gegenstände, z.B. Mülltonnen, und um dann nicht, wenn auch mit nur leicht aufgestellter Fronthaube (ca. 55 mm), weiterfahren zu müssen, muß es möglich sein, das Aufstellelement zu reversieren, d.h. in den Grundzustand mit vorgespannter Federanordnung zu bringen.

Zur Begrenzung des Aufwandes soll dieses Reversieren manuell, insbesondere durch einen Fahrzeuginsassen erfolgen können. Die hierbei direkt manuell ausübbaren Rückstellkräfte reichen jedoch nicht aus, um das aufgestellte Hubelement gegen die starke Federkraft der Schraubenfederanordnung direkt in den Ausgangszustand zurückzudrücken oder zurückzuziehen. Es ist daher bekannt und auch vorgeschlagen worden, spezielle Hilfswerkzeuge für das Reversieren im PKW mitzuführen. Um diese gesonderten Hilfswerkzeuge zu vermeiden, ist es gemäß der DE 101 11 096 A1 auch bekannt, die Fronthaube in Verbindung mit einer auf Zug beanspruchten Gasdruckfeder als Hebelarm für das Reversieren der im Scharnierbereich aufgestellten Fronthaube zu benutzen. Das Reversieren der im Haubenschlossbereich aufgestellten Fronthaube ohne Bord-Hilfswerkzeuge ist allerdings noch in keiner Schrift offenbart.

Der Erfindung liegt die Aufgabe zugrunde, die eingangs bezeichnete Einrichtung so auszubilden, daß mit einfachen Mitteln ohne gesondert an Bord mitgeführte Hilfswerkzeuge eine manuelle Reversierung des aufgestellten Hubelementes, insbesondere auch von Aufstellelementen im Haubenschlossbereich, möglich ist.

Die Lösung dieser Aufgabe gelingt bei einer Einrichtung zum Reversieren der Fronthaube eines Kraftfahrzeuges, die zum Schutz von Personen bei einem drohenden Frontalaufprall durch mindestens ein Aufstellelement aktiv aufstellbar ist, welches ein karosseriefest angebrachtes Unterteil und ein darin aufstellbar geführtes, mit der Fronthaube in Wirkverbindung stehendes Hubelement besitzt, das im Grundzustand mittels einer lösbaren Halte-Vorrichtung gegen die Vorspannkraft eines Federspeichers niedergehalten ist, und das im Fall eines drohenden Aufpralles durch sensorgesteuertes Lösen der Halte-Vorrichtung mittels eines Aktuators zusammen mit der Fronthaube um einen vorgegebenen Arbeitshub aufstellbar ist, gemäß der Erfindung dadurch, daß die Reversiereinrichtung eine unterhalb der Fronthaube angeordnete, an einem karosseriefesten Hebeldrehpunkt an- und abkoppelbar angelenkte, direkt oder indirekt manuell zu betätigende, Reversierhebel-Anordnung aufweist, welche in Wirkverbindung mit dem aufgestellten Hubelement zum Niederdrücken des Hubelementes in den Grundzustand bringbar ist.

Mit der fahrzeugfest angebrachten Reversierhebel-Anordnung ist eine einfache kostengünstige Reversiereinrichtung ohne gesonderte Hilfswerkzeuge an Bord des Fahrzeuges gegeben. Da die Reversierhebel-Anordnung vom karosseriefesten Hebeldrehpunkt betriebszustandshängig, insbesondere im Grundzustand, abkoppelbar ist, beeinträchtigt die Reversierhebel-Anordnung die Aufstellung des Hubelementes nicht.

Weiterbildungen und Ausgestaltungen der Erfindung sind in den Unteransprüchen gekennzeichnet sowie ergeben sich aus der nachfolgenden Figurenbeschreibung.

Anhand von in den Zeichnungen dargestellten Ausführungsbeispielen der Reversierhebel-Anordnung - im folgenden Reversierhebel genannt - wird die Erfindung näher erläutert.

Es zeigen:

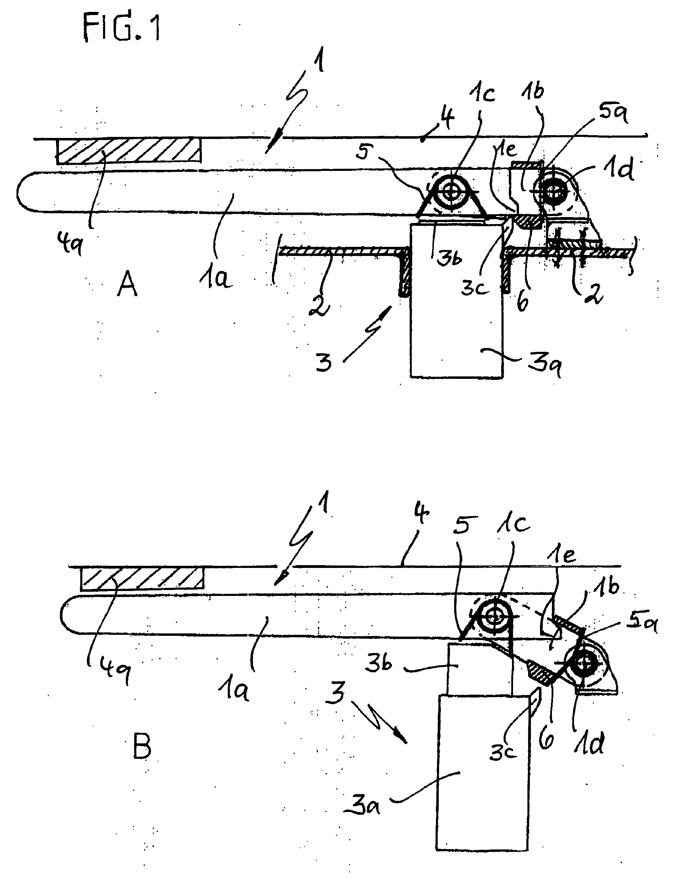

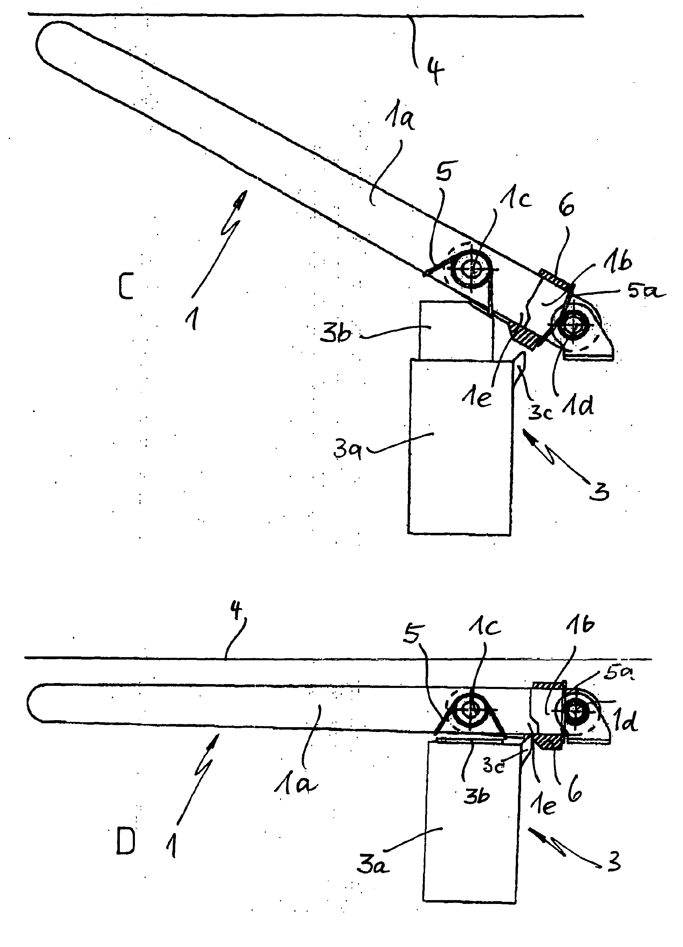

- Fig. 1: in vier Teilfiguren A - D ein Ausführungsbeispiel des Reversierhebels in Form eines einarmigen Knickhebels mit einem sich selbsttätig beim Öffnen der Fronthaube nach einer Aufstellung des Hubelementes feststellenden Gelenk in vier verschiedenen Betriebszuständen, wobei der Knickhebel direkt an der Karosse des Vorderwagens drehbar angelenkt ist,

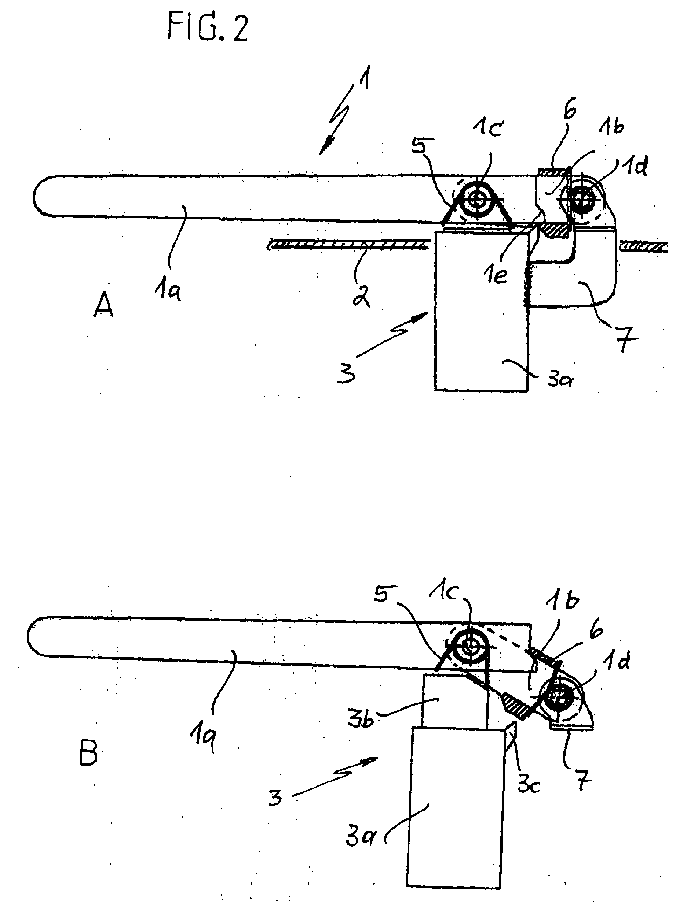

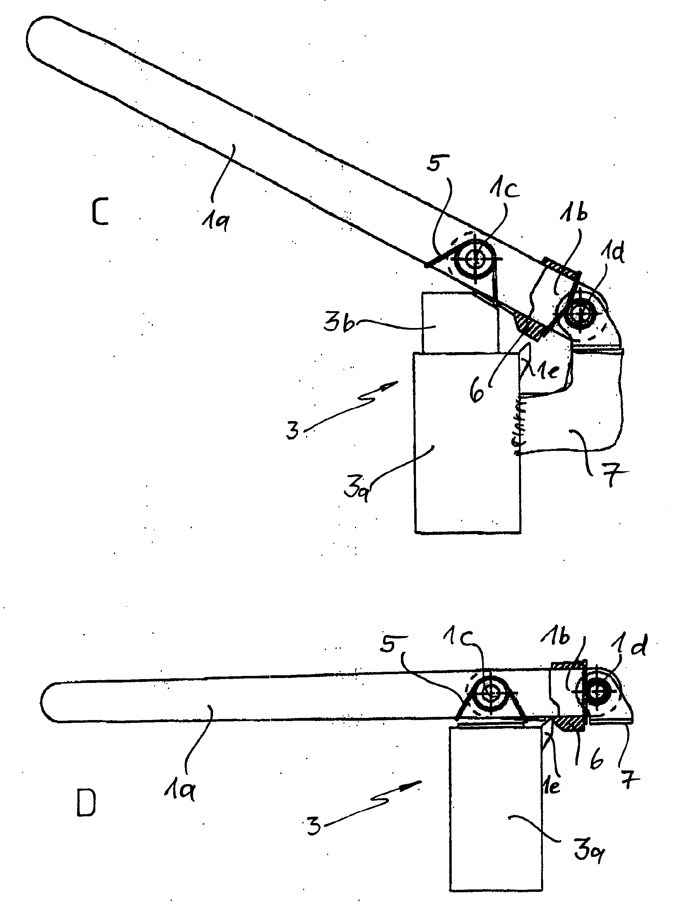

- Fig. 2: in vier Teilfiguren A - D den Knickhebel nach Fig. 1 ebenso in vier Betriebszuständen, wobei der Knickhebel direkt an dem karosseriefest angebrachten Unterteil des Aufstellelementes drehbar angelenkt ist, und

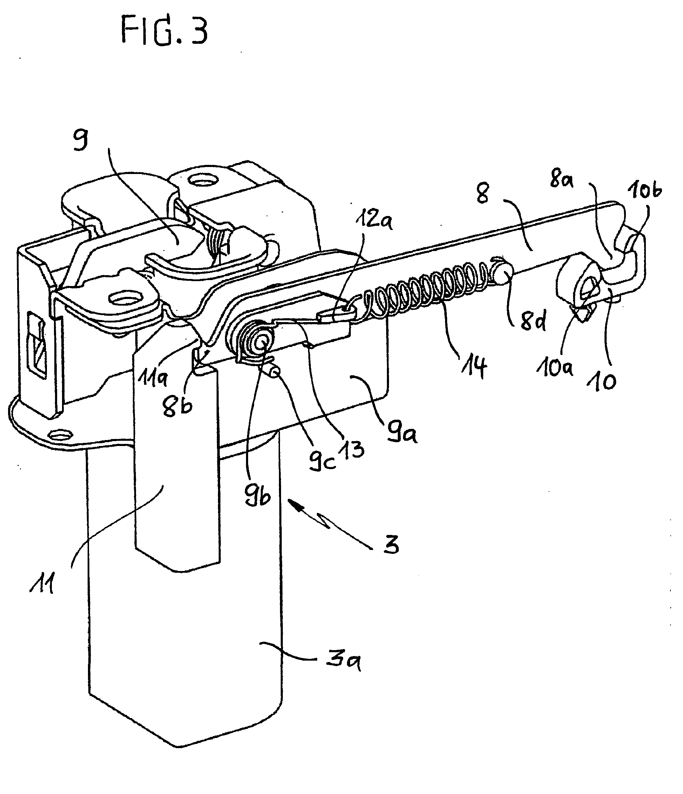

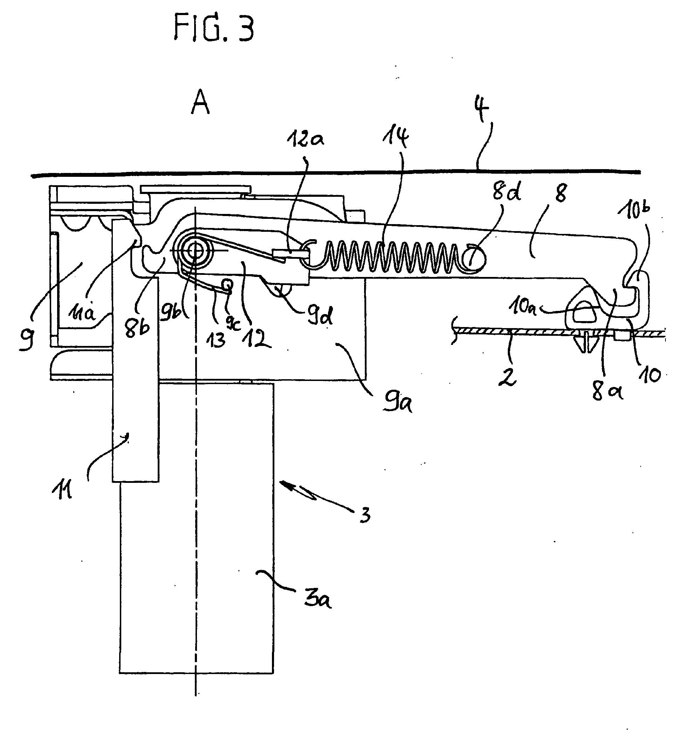

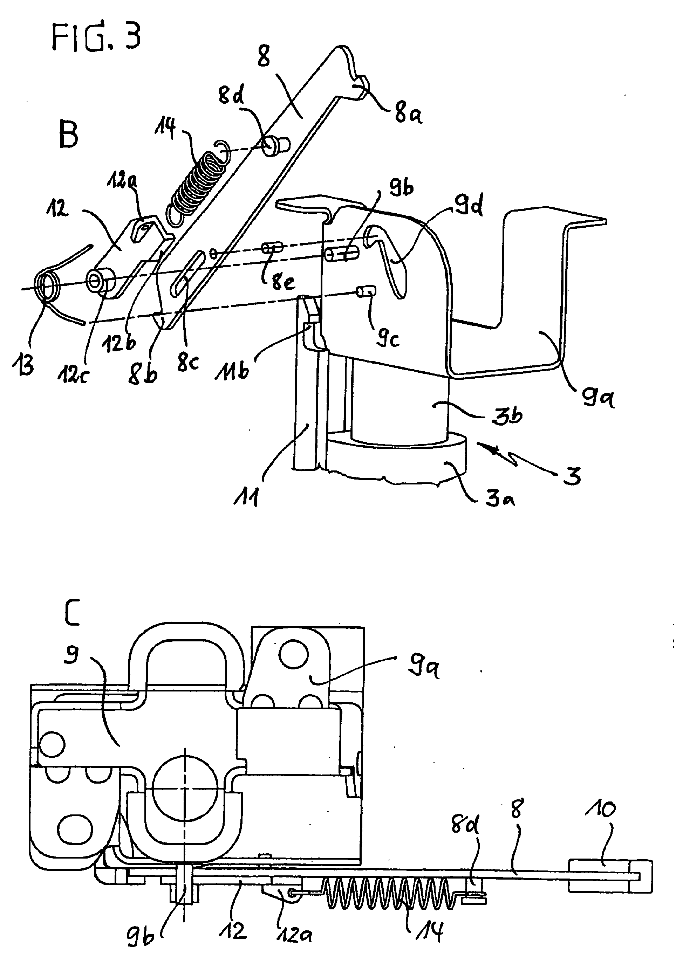

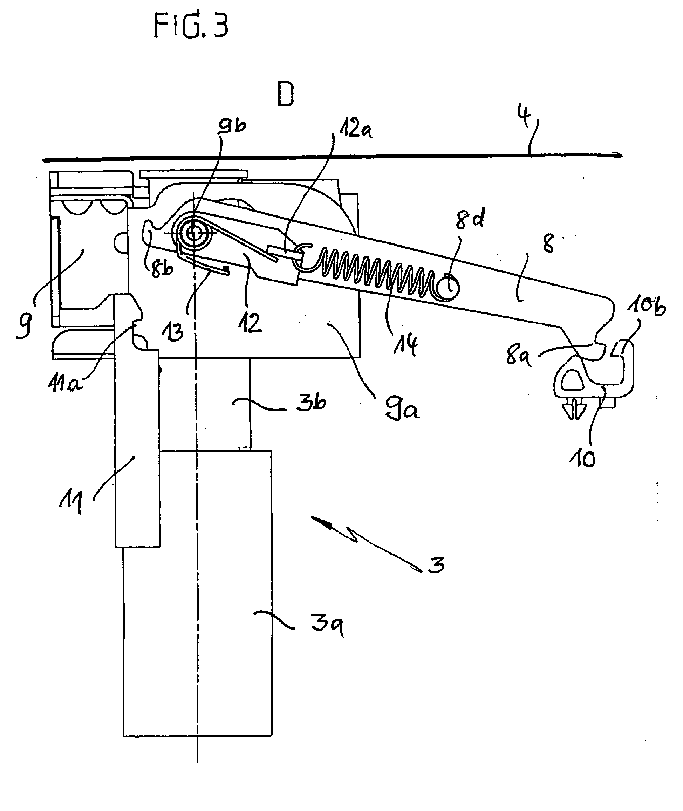

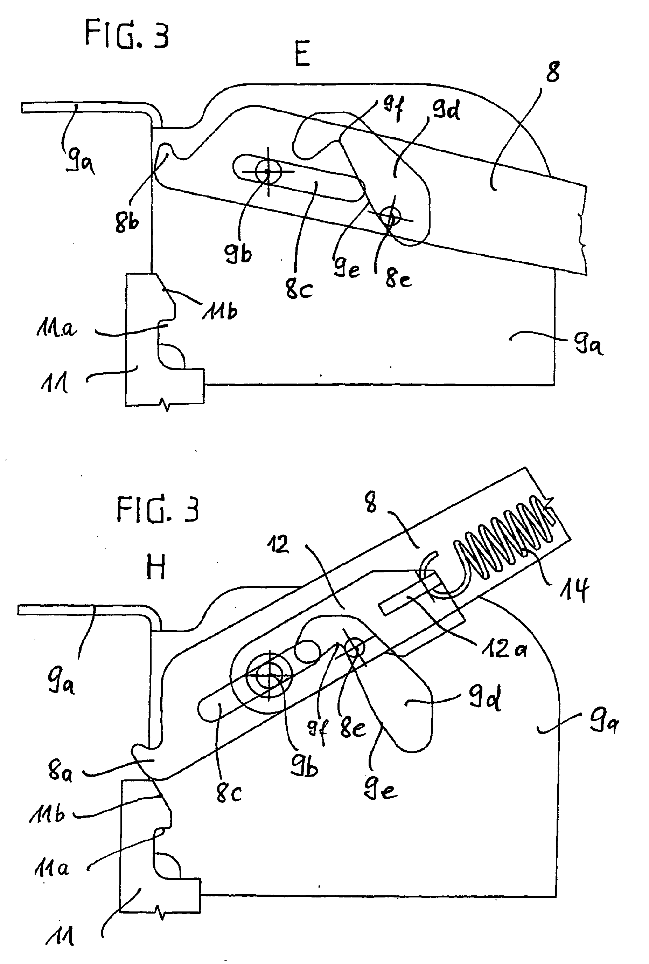

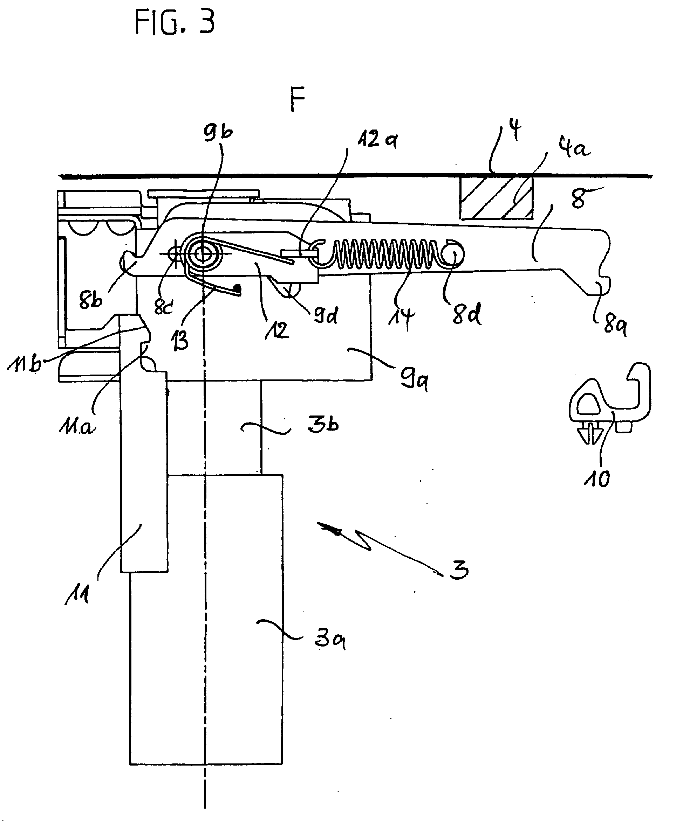

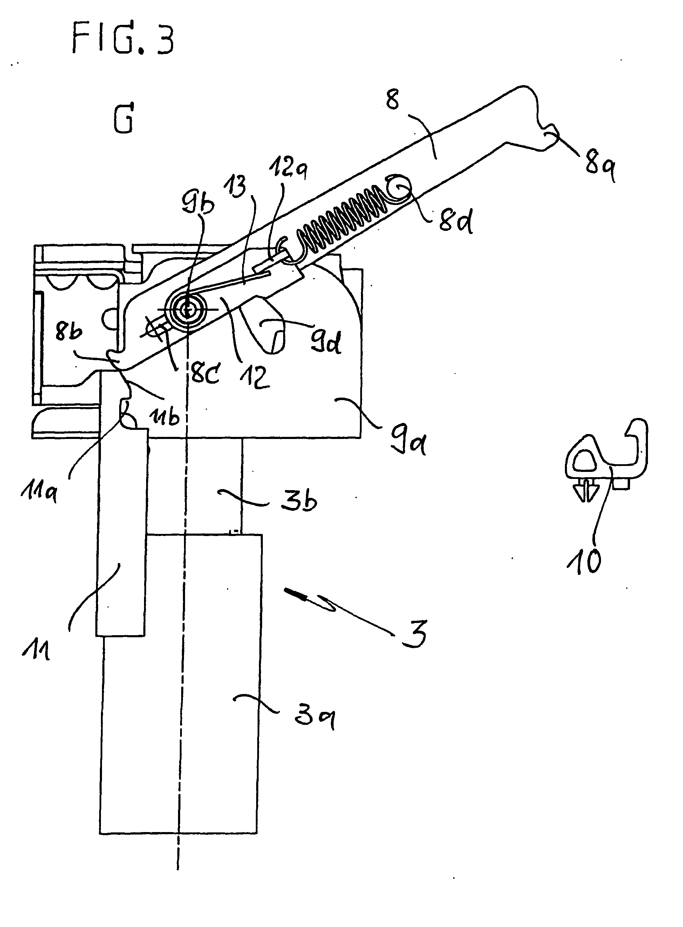

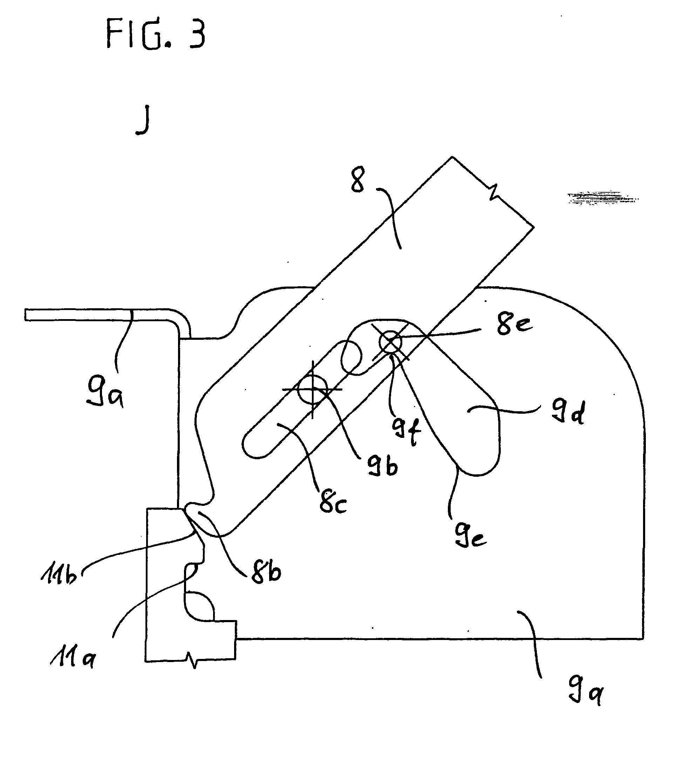

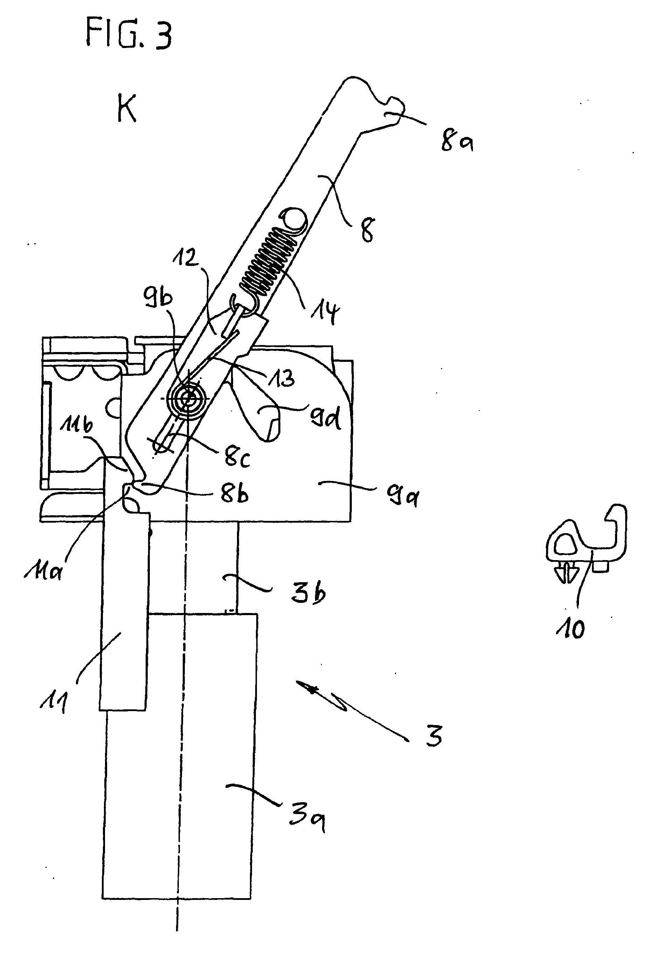

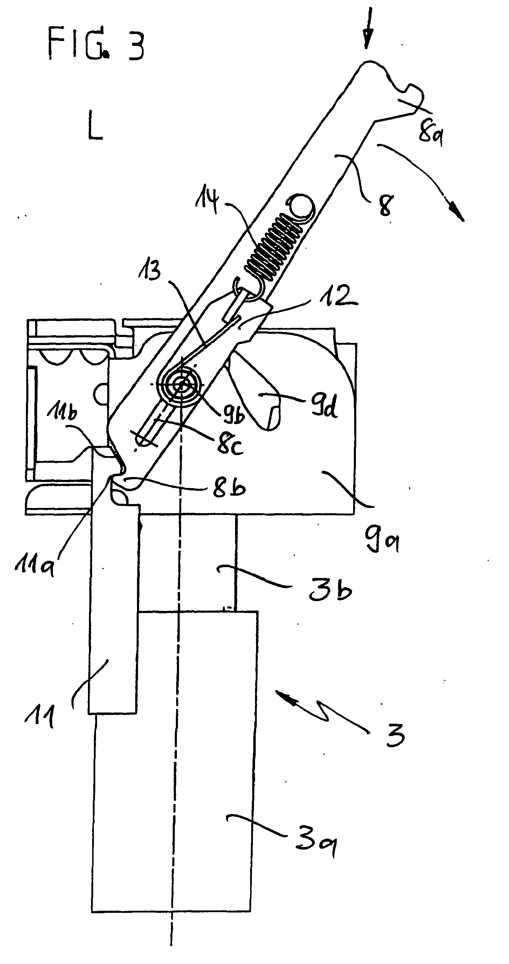

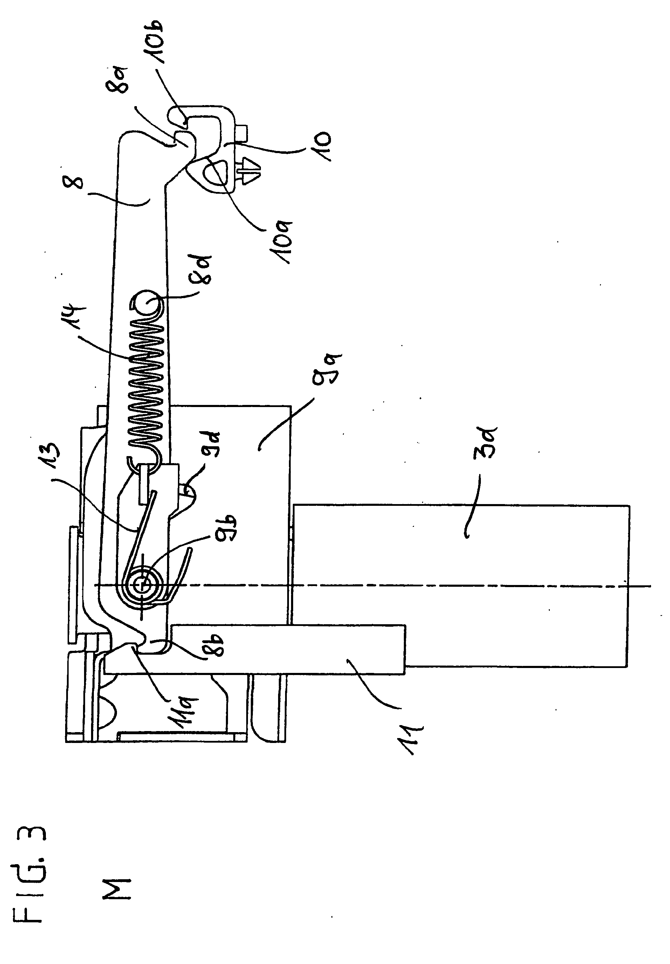

- Fig. 3: in einer isometrischen Darstellung ein zweites Ausführungsbeispiel des Reversierhebels in Form eines axial verschiebbaren einarmigen Schiebehebels, der im Haubenschloß, das direkt auf dem Aufstellelement montiert ist, axial verschiebbar und drehbeweglich gehaltert ist, mit verschiedenen Ansichten und Betriebszuständen des Ausführungsbeispieles in Figurenteilen A - M, und zwar im Figurenteil
- A in einer schematischen Längsschnitt-Darstellung den Grundzustand des Systems mit vom Hebel-Drehpunkt abgekoppelten Schiebehebel, und nicht aktivierten Aufstellelement,
- B in einer Ausschnitt-Explosionsdarstellung die Komponenten für die Halterung und Bewegung des Schiebehebels im Haubenschlossträger,
- C eine Draufsicht auf das System,
- D das System nach Figurenteil A, jedoch mit aktiviertem Aufstellelement und teilaufgestelltem Schiebehebel,
- E in einer schematisierten Ausschnitt-Darstellung aus Teil D die Positionen der Komponenten für die axiale und drehende Bewegung des Schiebehebels im Systemzustand nach Teil D,
- F das System nach Figurenteil D, jedoch mit endgültig aufgestelltem Schiebehebel,
- G das System, ausgehend vom Figurenteil F mit steil aufgestelltem Schiebehebel nach Öffnen der Fronthaube,
- H in einer schematisierten Ausschnitt-Darstellung aus Teil G die Positionen der Komponenten für die axiale und drehende Bewegung des Schiebehebels mit weiterhin vom Hebeldrehpunkt abgekoppeltem Schiebehebel,
- J in einer schematisierten Ausschnitt-Darstellung die Positionen der Komponenten für die axiale und drehende Bewegung des Schiebehebels bei Beginn des Einkoppelns des Schiebehebels am Hebeldrehpunkt,
- K in einer Längsschnitt-Darstellung entsprechend Teil G die Position des Schiebehebels unmittelbar vor seiner Einkopplung im Hebel-Drehpunkt,
- L in einer Längsschnitt-Darstellung entsprechend Teil K den im Hebel-Drehpunkt eingekoppelten Schiebehebel vor Beginn der Reversierbewegung, und
- M in einer Längsschnitt-Darstellung entsprechend Teil L den Zustand mit reversiertem Aufstellelement und reversierter Fronthaube unmittelbar vor der ausgekoppelten Position des Schiebehebels im Grundzustand, und

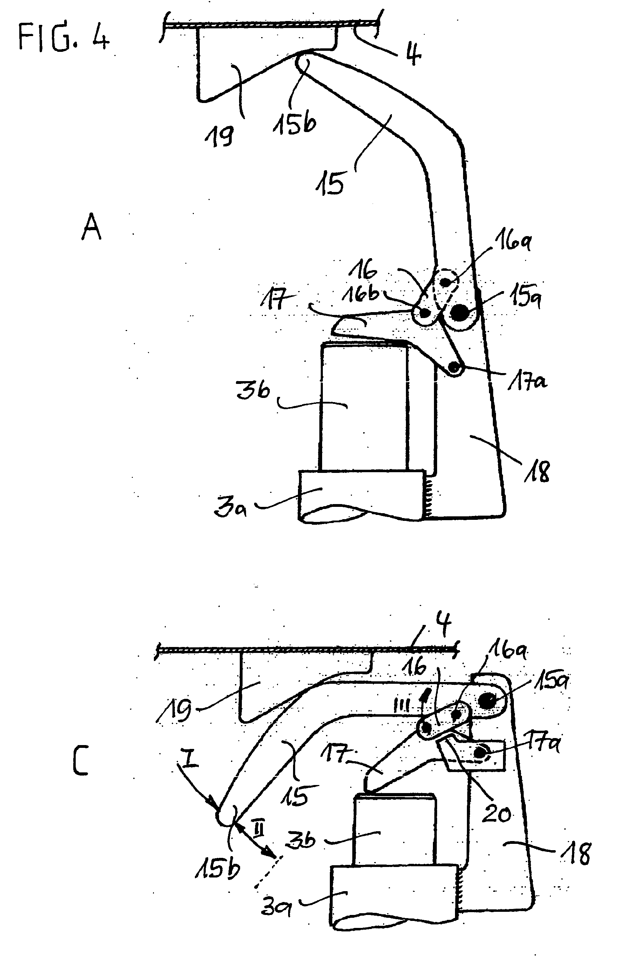

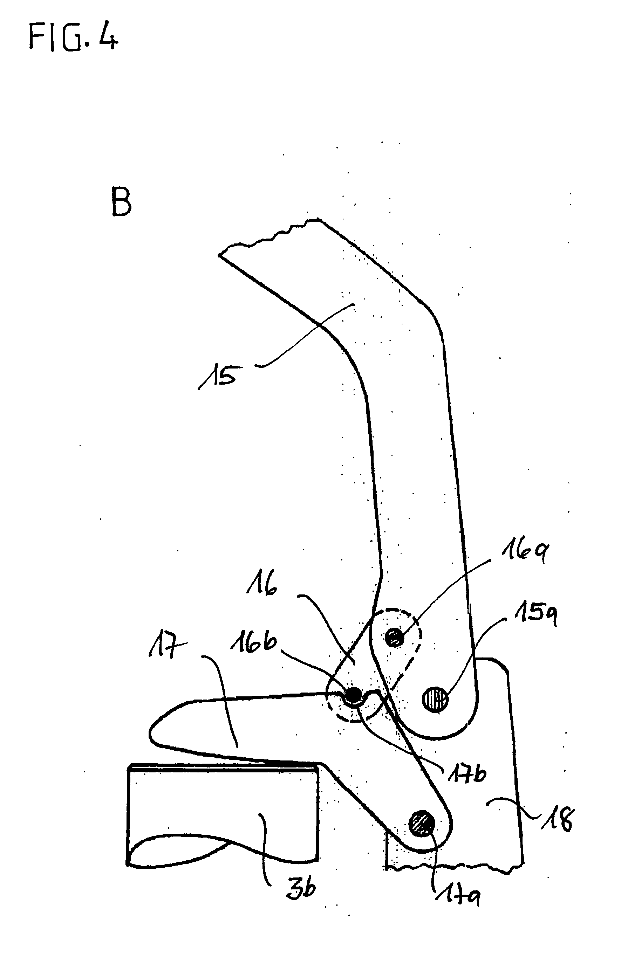

- Fig. 4: in drei Figurenteilen A - C eine vierte Ausführungsform der Erfindung, mit aufgestellter Haube im Figurenteil A, mit eingekoppeltem Reversierhebel im Figurenteil B am Beginn der Rückstellung des Hubelementes, und bei reversiertem Hubelement, jedoch noch nicht verriegelter Fronthaube im Figurenteil C.

Die Fig. 1 zeigt in vier Figurenteilen A - D vier verschiedene Zustände einer ersten Ausführungsform der erfindungsgemäßen Reversiereinrichtung, mit einem einarmigen Reversierhebel, der als sogenannter Knickhebel 1 mit einem feststellbaren Gelenk ausgebildet ist, und der schwenkbar direkt an der Karosse 2 eines Kraftfahrzeuges angebracht ist. An dieser Karosse 2 ist auch das Unterteil 3 a eines Aufstellelementes 3 fest angebracht, in welchem ein Hubelement 3 b des Aufstellelementes aufstellbar geführt ist. Derartige Aufstellelemente sind, wie eingangs erwähnt, Gegenstand einer Reihe von Schutzrechtsschriften, und brauchen daher hier nicht näher dargestellt zu werden, zumal die Erfindung prinzipiell von dem konkreten Aufbau des Aufstellelementes unabhängig ist. Dieses ist im Prinzip typischerweise so ausgebildet, daß das Hubelement im Grundzustand mittels einer lösbaren Halte-Vorrichtung gegen die Vorspannkraft eines Federspeichers niedergehalten und im Fall eines drohenden Aufpralles durch sensorgesteuertes Lösen der Halte-Vorrichtung mittels eines Aktuators um einen vorgegebenen Arbeitshub aufstellbar ist.

Im Beispiel nach Fig. 1 ist das Aufstellelement 3 im Bereich des Haubenschlosses einer symbolisch angedeuteten Fronthaube 4, vorzugsweise an dem Frontmodul der Karosse, angebracht, um die Haube nach Entriegelung des Haubenschlosses im Frontbereich aufzustellen.

Der Knickhebel 1 besteht aus zwei Hebelteilen, einem langen Betätigungs-Hebelteil 1 a und einem kurzen Stütz-Hebelteil 1 b, die in einem ersten Drehpunkt 1 c, vorgespannt durch eine erste Schenkelfeder 5, gelenkig miteinander verbunden sind. Der erste Drehpunkt 1 c bildet somit ein Knickgelenk zwischen beiden Hebelteilen.

Der Stütz-Hebelteil 1 b ist dabei drehbar um einen zweiten karosseriefesten Drehpunkt 1 d an der Karosse 2 angelenkt, welcher den Hebel-Drehpunkt für den einarmigen Reversier-Knickhebel bildet.

Auf dem Stütz-Hebelteil 1 b ist ferner eine Schiebehülse 6 axial verschiebbar aufgenommen, um eine formschlüssige Verbindung zu dem langen Betätigungs-Hebelteil 1 a herzustellen, d.h. um das Knickgelenk im Drehpunkt 1 c festzustellen, d.h. starr zu stellen. Die Schiebehülse 6 kann man daher auch als Arretierungsschieber bezeichnen. Eine Nase 3 c am Unterteil 3 a des Aufstellelementes steht dabei in Wirkverbindung an einem abgeschrägten Teil der Schiebehülse, die durch eine zweite Schenkelfeder 5 a auf der Achse 1 d vorgespannt ist.

Der Figurenteil A zeigt den Grundzustand des Systems mit dem niedergehaltenen Hubelement 3 b. Die Schiebehülse 6 ist zurückgezogen und die beiden Hebelteile 1 a, 1 b sind gegeneinander verdrehbar. Das Knickgelenk im Drehpunkt 1 c ist frei, und der Wirkeingriff der Nase 3 c mit der Schiebehülse sorgt dafür, daß die Schiebehülse 6 gegen die Vorspannkraft der Feder 5 a im zurückgezogenen Zustand bleibt. Die Vorspannkraft der Schenkelfeder 5 wiederum sorgt dafür, daß das lange Betätigungs-Hebelteil 1 a direkt an einem Anschlagelement 4 a der Fronthaube 4 in horizontaler Lage anliegt. Der Knickhebel 1 ist somit auf Knickung eingestellt und behindert damit das Aufstellen der Fronthaube 4 nicht.

Wird das Aufstellelement 3 sensorgesteuert aktiviert, fährt das Hubelement 3 b um den Arbeitshub auf. Dieser Zustand mit dem aufgestellten Hubelement 3 b ist im Figurenteil B dargestellt. Beim Ausfahren des Hubelementes 3 b nimmt dieses den horizontal direkt unter dem Anschlagelement 4 a der Fronthaube 4 liegenden langen Betätigungs-Hebelteil 1 a und damit auch die Fronthaube 4 um den Arbeitshub mit. Eine Nase 1 e am Betätigungs-Hebelteil 1 a sorgt dafür, daß das Stütz-Hebelteil 1 b mit der Schiebehülse 6 um den Drehpunkt 1 d im Uhrzeigersinn verschwenkt wird. Der Wirkeingriff der Nase 3 c mit der Schiebehülse 6 wird dabei aufgehoben, so daß die Schenkelfeder 5 a die Schiebehülse etwas axial nach vorne schieben kann.

Zum Reversieren wird, wie im Figurenteil C dargestellt, die Fronthaube 4 zunächst weiter geöffnet, und der abgeknickte Betätigungs-Hebelteil 1 a axial in Bezug auf den Stütz-Hebelteil 1 b selbsttätig zentriert und mittels der Schiebehülse 6 selbsttätig formschlüssig verriegelt. Damit ist das Knickgelenk im Drehpunkt 1 c starr gestellt.

Durch Niederdrücken des nun starren, um den Drehpunkt 1 d schwenkbaren einarmigen Reversierhebels 1 kann das Hubelement 3 b in den Grundzustand mit geschlossener Fronthaube 4 reversiert werden (Figurenteil D). Bei starker Federkraft des Aufstellelementes kann auch die Fronthaube 4 zum Betätigen des Reversierhebels über das Anschlagelement 4 a benutzt werden. Der Reversier-Knickhebel 1 kann auch in nicht dargestellter Weise mittels eines Bowdenzuges, der mit seinem anderen Ende an der Fronthaube oder einer Fahrzeugtür eingehängt ist, durch Verschwenken der Fronthaube oder der Fahrzeugtür nach unten gezogen werden.

In Fig. 1 ist der Reversier-Knickhebel 1 in Verbindung mit einem Aufstellelement 3 im Haubenschlossbereich dargestellt. Das Prinzip des karosseriefest angelenkten Reversierhebels mit Betätigung durch die Fronthaube kann auch zum Reversieren von Aufstellelementen im Scharniebereich angewendet werden. Bei breiten Fronthauben sind häufig zwei Haubenschlösser mit jeweils einem Hubelement beabstandet nebeneinander angeordnet. Dabei sind Konstruktionen denkbar, bei denen mittels eines einzigen Reversierhebels, z.B. über einen Seilzug, beide Aufstellelemente reversiert werden können.

Die Fig. 2 zeigt in vier Figurenteilen A - D entsprechend Fig. 1 vier verschiedene Zustände einer zweiten Ausführungsform der erfindungsgemäßen Reversiereinrichtung, mit einem einarmigen Reversierhebel, der ebenfalls als Knickhebel 1 mit einem feststellbaren Gelenk ausgebildet ist.

Die Ausführungsform des Reversier-Knickhebels 1 nach Fig. 2 entspricht völlig derjenigen nach Fig. 1, weshalb auch die entsprechenden Teile und Komponenten mit denselben Bezugszeichen versehen sind. Der einzige Unterschied besteht darin, daß das Stütz-Hebelteil 1 b mit dem Drehpunkt 1 d für den starr gestellten Reversier-Knickhebel 1 nicht direkt an der Karosse, sondern über einen symbolisch dargestellten Stützarm 7 am karosseriefest angebrachten Unterteil 3 a des Aufstellelementes 3 befestigt ist.

Für die Wirkungsweise des Reversier-Knickhebels 1 und die Abläufe gemäß den Figurenteilen A - D gilt daher das zur Fig. 1 gesagte in gleicher Weise.

Die Besonderheit der zweiten Ausführungsform nach Fig. 2 besteht darin, daß das Aufstellelement mit dem integrierten Reversier-Hebel eine komplette, vormontierte Baueinheit bildet, was die Montage des Systems vereinfacht.

Die Fig. 3 zeigt in einer isometrischen Darstellung in Verbindung mit mehreren Figurenteilen A - M in verschiedenen Ansichten und Zuständen eine dritte Ausführungsform des erfindungsgemäßen Reversierhebels, der als Schiebehebel 8, d.h. als axial verschiebbarer, starrer einarmiger Hebel ausgebildet ist, in Verbindung mit einem vorderen Aufstellelement 3 im Haubenschlossbereich, auf dessen Hubelement 3 b direkt das Haubenschloß 9 der Fronthaube 4 montiert ist. Das Unterteil 3 a des Aufstellelementes ist, wie üblich, an der Karosse 2 des Vorderwagens, vorzugsweise am Frontmodul angebracht. Wird daher das Hubelement 3 b im Crash-Fall ausgefahren, wird das Haubenschloß 9 im weiterhin verriegelten Zustand samt Fronthaube mit aufgestellt.

Ein derartiges Aufstellelement mit anmontiertem Haubenschloß wird beispielsweise in älteren, nicht veröffentlichten deutschen Patentanmeldungen der Patentanmelderin beschrieben.

Die Fig. 3 sowie der Figurenteil 3 A zeigen den Grundzustand des Systems, d.h. das Aufstellelement 3 im gespannten Zustand und eingefahrenem Hubelement 3 b (nicht sichtbar). Auf dem Hubelement sitzt der Schlossträger 9 a des vorderen Haubenschlosses 9, wie insbesondere auch die Explosions-Darstellung des Figurenteiles 3 B und die Draufsicht nach Figurenteil 3 C zeigen.

Der Schiebehebel 8 besitzt an beiden axialen Enden Haltenasen 8 a, 8 b, mit denen er funktionsbedingt wahlweise einseitig einrasten kann. Im Grundzustand nach Fig. 3 A ist die freie Hebelseite mit ihrer angeformten vorderen Haltenase 8 a im Wirkeingriff mit einer an der Karosserie 2 fest angebrachten Halterung 10, die eine Einführschräge 10 a und eine Hinterschneidung 10 b besitzt, wobei die Rastnase 8 a unterhalb der Hinterschneidung eingespannt ist.

Die gegenüberliegende Haltenase 8 b ist außer Wirkeingriff mit einer Hinterschneidung 11 a eines am karosseriefesten Unterteil 3 a des Hubelementes 3 angebrachten Reversierwinkels 11. Sind die Haltenase 8 b und die Hinterschneidung 11 a im Wirkeingriff, bilden sie den Drehpunkt des einarmigen Schiebehebels 8.

Der Schiebehebel 8 weist, wie der Figurenteil 3 B zeigt, ein Langloch 8 c auf, und er ist auf einem Lagerzapfen 9 b, der im Haubenschlosshalter 9 a fest angebracht ist, schwenkbar am Haubenschlosshalter 9 a angelenkt. Er ist dadurch in Bezug auf die vom Lagerzapfen 9 b vorgegebene Drehachse im Langloch 8 c axial längsverschiebbar. Auf dem Lagerzapfen 9 b ist ferner eine Drucklasche 12, vorgespannt durch eine Vorspann-Schenkelfeder 13 mit einer angeformten Lagerbuchse 12 c drehbar aufgenommen. Die Drucklasche weist eine angeformte Öse 12 a auf, in die ein Ende einer Zugfeder 14 eingehängt ist, deren anderes Ende an einem Haltezapfen 8 d des Reversier-Schiebehebels 8 eingehängt ist. An der Öse 12 a liegt ein Ende der Schenkelfeder 13 an, deren anderes Ende an einem Anschlag 9 c des Haubenschlossträgers anliegt. Die Drucklasche 12 besitzt ferner eine untere abgeknickte Kante 12 b, die an der Unterseite des Schiebehebels 8, diesen bei Drehung mitnehmend, anliegt. Am Schiebehebel 8 ist ferner ein Steuerbolzen 8 e verankert, der im steuernden Wirkeingriff mit einer Steuerkulisse 9 d im Haubenschloß-Halter 9 a steht.

Wird das Hubelement 3 b nach einer Crash-Auslösung, wie im Figurenteil 3 D dargestellt, ausgefahren, wird das Haubenschloß 9 mit dem Revers-Schiebehebel 8 vom Hubelement mitgeschleppt, da die Hebel-Nase 8 b außer Wirkeingriff mit der Hinterschneidung 11 b an dem Reversierwinkel ist. Mit der Aufstellung des Haubenschlosses wird auch die Fronthaube 4 entsprechend aufgestellt.

Beim Aufstellen des Hubelementes 3 b nimmt der Reversier Schiebehebel 8 zunächst, wie im Figurenteil 3 D gezeigt, eine Schräglage in der Halterung 10 ein. Dadurch wird die Verklinkung zwischen der Hebelnase 8 a und der Hinterschneidung 10 b aufgehoben, so daß nunmehr die gespannte Zugfeder 14 den Schiebehebel 8 nach links zurückziehen kann, wodurch das Hebelende 8 a aus der Halterung 10 herausgleitet. Die Position des Lagerzapfens 9 b im Langloch 8 c sowie die Position des Steuerbolzens 8 e in der Steuerkulisse 9 d beim Zurückziehen zeigt dabei die Ausschnitt-Darstellung des Figurenteiles 3 E. Die Zugfeder 14 hat den Schiebehebel 8 so weit zurückgezogen, bis der Steuerbolzen 8 e am linken Kulissenrand 9 e zur Anlage kommt. Die Vorspannfeder 13 verdreht dabei über die Drucklasche 12 den Schiebehebel 8, wie im Figurenteil 3 F dargestellt, in die horizontale Position, bis dieser an der Fronthaube anliegt.

Um das gemäß Fig. 3 F aufgestellte System zu reversieren, wird zunächst die Haube 4 weiter geöffnet. Dabei erfährt der Reversier-Schiebehebel 8 zwei überlagerte Bewegungen. Einmal dreht sich der Schiebehebel 8, unterstützt durch die Schenkelfeder 13, gegen den Uhrzeigersinn und stellt das freie Hebelende mit der Rastnase 8 a weiter auf. Dabei "klettert" der Steuerbolzen 8 e, wie der Übergang von dem Figurenteil 3 E zum Figurenteil 3 H zeigt, an der linken Kulissenwand 9 e hoch nach oben. Dabei wird auch der Schiebehebel 8 durch die Zugfeder 14 etwas nach links verschoben, bis die Hakennase 8 a mit der Einführschräge 11 b an dem Reversierwinkel 11 in Wirkkontakt tritt. Diesen Zustand zeigt auch die zur Ausschnitt-Darstellung 3 H gehörende Übersicht-Darstellung nach Fig. 3 G.

Die Schenkelfeder 13 stellt den Schiebehebel 8 weiter steiler auf, bis der Steuerbolzen 8 e die höchste Kulissenkontur 9 f erreicht und darüber hinweggleitet. Dabei rutscht die Hakennase 8 b an der Einführschräge 11 b nach unten. Diesen Zustand zeigt der Figurenteil 3 J.

Nunmehr ist der Steuerbolzen 8 e frei und die Zugfeder 14 kann den Schiebehebel 8 weiter axial nach links verschieben, wobei die Hakennase 8 b immer tiefer an der Einführschräge 11 b nach unten gleitet (Figurenteil 3 K), bis sie schließlich an der Hinterschneidung 11 a des Reversierwinkels einrastet und den neuen Hebel-Drehpunkt für den anschließenden Reversiervorgang bildet (Figurenteil 3 L).

Der Reversiervorgang wird vorgenommen, indem auf das freie, nach Fig. 3 L aufgestellte, Schiebehebelende 8 a eine Kraft in Pfeilrichtung ausgeübt wird. Dies kann erfolgen, indem der Hebel direkt per Hand nach unten gedrückt wird, oder unter Zuhilfenahme der aufgestellten Fronthaube als Hebelarm, indem die Fronthaube in gewohnter Weise nach unten gedrückt wird. Auch ist es denkbar, den Schiebehebel über einen Bowdenzug, der an einem beweglichen Fahrzeugteil, wie Fronthaube oder Fahrzeugtür, angelenkt ist, nach unten zu ziehen. Mit dem Reversier-Schiebehebel 8 wird auch das aufgestellte Hubelement 3 b eingedrückt. Das freie Hebelende rutscht am Ende des Reversiervorganges mit seiner Halternase 8 a über die Einführschräge 10 a in das Halteelement hinein (Figurenteil 3 M). Dabei wird der Schiebehebel 8 gegen die Vorspannkraft der Zugfeder 14 etwas axial nach rechts ausgezogen und rastet mit seiner Haltenase 8 a unterhalb der Hinterschneidung 10 b ein. Bei diesem axialen Schiebevorgang des Reversierhebels wird das bisher mit der Haltenase 8 b in der Hinterschneidung 11 a eingehakte andere Ende des Reversierhebels aus der Verankerung gezogen, so daß der Reversierhebel wieder frei ist für eine ungehinderte neue Aufstellung. Dieser Zustand entspricht dem Grundzustand nach Figurenteil 3 A.

Die dargestellte Konstruktion sorgt daher dafür, daß der Schiebehebel 8 die Aufstellung des Hubelementes nicht beeinträchtigt und selbsttätig beim Öffnen der Fronthaube nach einer Aufstellung in den karosseriefesten Drehpunkt eingekoppelt und nach erfolgter Reversierung wieder ausgekoppelt wird.

In der Fig. 3 ist eine Ausführungsform dargestellt, bei der das Haubenschloß direkt auf dem Hubelement aufgebracht ist. Es ist auch eine Konstruktion möglich, bei der das Haubenschloß in konventioneller Weise an der Karosse des Vorderwagens neben dem Aufstellelement angebaut ist. Bei der Crashaufstellung muß dann neben der Aktivierung des Aufstellelementes zusätzlich auch das Haubenschloß geöffnet werden. Bei einer derartigen Konstruktion haltert das Hubelement im Kopfteil unmittelbar den Schiebehebel mit allen zugehörigen Komponenten, die gemäß dem Figurenteil 3 B im Haubenschlosshalter 9 a angebracht sind.

In Fig. 4 ist in drei Figurenteilen A bis C ein drittes Ausführungsbeispiel der erfindungsgemäßen an- und abkoppelbaren Reversierhebel-Anordnung dargestellt. In diesem Ausführungsbeispiel besteht die Reversierhebel-Anordnung aus drei miteinander drehgelenkig verbundenen Hebeln, einem Betätigungs-Hebel 15, einem Zwischenhebel 16 und einem Rückstell-Hebel 17. Der Betätigungs-Hebel 15 ist am Punkt 15 a an einem fahrzeugfesten Lagerbock 18, der vorzugsweise, wie dargestellt, am Unterteil 3 a des Aufstellelementes 3 befestigt ist, drehbeweglich angelenkt. Das freie Ende 15 b des Betätigungs-Hebels ist abgerundet und steht in Wirkverbindung mit einer Steuerkulisse 19, die an der Unterseite der Fronthaube 4 angebracht ist.

Der Zwischenhebel 16 ist mit einem Ende am Punkt 16 a drehbeweglich am Betätigungs-Hebel 15 angelenkt und weist am anderen Ende einen Rastbolzen 16 b auf. Er ist über eine (nicht dargestellte) Drehfeder gegen den Uhrzeigersinn vorgespannt. Er kann so weit schwenken, daß er seitlich am Betätigungshebel vorbei über seinen Totpunkt hinaus verschwenkbar ist. Die Totpunktlage liegt dann vor, wenn die Zwischenhebel-Achse parallel zur Betätigungs-Hebelachse liegt.

Der Rückstell-Hebel 17 ist mit einem Ende am Punkt 17 a drehbeweglich am Lagerbock 18 angelenkt, wobei das andere Ende etwas bumerangartig abgewinkelt ist, derart, daß dieses Ende mit dem Hubelement 3 b reversierend in Wirkeingriff treten kann. Der Rückstell-Hebel weist im abgewinkelten Teil eine Aussparung 17 b auf, die in verrastendem Wirkeingriff mit dem Rastbolzen 16 b treten kann. Die Elemente 16 b und 17 b stellen letztlich die An- und Abkopplung der Reversierhebel-Anordnung her.

Dem Zwischenhebel 16 ist ein fahrzeugfester Anschlag 20 zugeordnet, wie noch erläutert werden wird.

Beim Reversiervorgang nach einer Haubenaufstellung wird der Betätigungs-Hebel 15, wie dargestellt, durch manuelles Schließen der Fronthaube 4 betätigt. Bei diesem Schließvorgang gleitet das freie Ende 15 b des Betätigungs-Hebels 15 an der Steuerkulisse 19 entlang unter Verschwenken des Betätigungs-Hebels 15 gegen den Uhrzeigersinn. Allerdings ist es auch denkbar, den Betätigungs-Hebel direkt manuell zu verschwenken.

Beim Aufstellen gleitet das freie Ende des Zwischenhebels 16 mit seinem Rastbolzen 16 b über die obere Kontur des Rückstell-Hebels 17, bis der Rastbolzen 16 b in der Aussparung 17 b des Rückstell-Hebels 17 einrastet und arretiert (Figurenteil B). An der Raststelle bildet sich ein Kraftangriffspunkt für die Einleitung der Reversierkraft aus, d.h. die Reversierhebel-Anordnung ist an den Hebeldrehpunkt 17 a angekoppelt. Es gilt dabei das Hebelgesetz: Betätigungs-Hebelarm x Handkraft = Zwischen-Hebelarm x abgehende Kraft, wobei letztere direkt auf das aufgestellte Hubelement 3 wirkt.

Jetzt kann der "eigentliche" Reversierhub, der das aufgestellte Hubelement 3 b in den gehaltenen Grundzustand zurücksetzt und die Halterung aktiviert, d.h. spannt, beginnen (Pfeil I in Fig. 4 C). Nach dem Spannen der Halterung des Hubelementes ist aber die Fronthaube noch nicht im (nicht dargestellten, separat angeordneten) Haubenschloß bzw. ggf. den Haubenschlössern verriegelt. Es muß ein weiterer Hub gefahren werden, bis auch das Haubenschloß verriegelt.

Dazu wird der Betätigungs-Hebel 15 gegenüber der Stellung in Fig. 4 C weiter in Pfeilrichtung betätigt. Dadurch kommt der Zwischen-Hebel 16 mit der unteren Längsseite am fahrzeugfest montierten Anschlag 20 zur Anlage.

Zum Schließen des Haubenschlosses wird die Fronthaube weiter zugedrückt und der Betätigungs-Hebel im gleichen Maße gegen den Uhrzeigersinn verschwenkt (Pfeil II). Weil der Zwischenhebel 16 einseitig drehbar am Betätigungs-Hebel 15 angelenkt ist und am festen Anschlag 20 anliegt, wird durch das weitere Drehen des Betätigungs-Hebels 15 der Zwischenhebel 16 im Uhrzeigersinn gedreht, wie durch den Pfeil III in Fig. 4 C angedeutet, und zwar zunächst bis in die Parallellage zum Betätigungs-Hebel 15, d.h. in die Totpunktlage und dann darüber hinaus. D.h., wenn der Anschlag 20 erreicht ist, machen der Betätigungs-Hebel 15 und der Zwischenhebel 16 gegenläufige Drehbewegungen. Dabei wird der Kraftangriffspunkt der Reversierhebel-Anordnung aufgehoben, indem der Rastbolzen 16 b des Zwischenhebels 16 aus der Aussparung 17 b am Rückstellhebel 17 herausgeschoben wird. Dadurch ist die Reversierhebel-Anordnung vom karosseriefesten Hebelpunkt 17 a entkoppelt, und das Aufstellelement ist frei für die nächste Crash-Auslösung, ohne daß die Aufstellbewegung von der Reversierhebel-Anordnung merklich beeinträchtigt wird.

Durch eine reibschlüssige Halterung wird der Betätigungs-Hebel in dieser Lage fixiert. Die Aufstellkraft des Hubelementes ist so groß, daß dabei die reibschlüssige Halterung aufgegeben und die Reversierhebel-Anordnung mit aufgestellt wird.

Dabei wird die Verrastung zwischen den Hebeln wiederhergestellt (Figurenteil B).

### Bezugszeichenliste

- 1: Knickhebel
- 1 a: Betätigungs-Hebelteil
- 1 b: Stütz-Hebelteil
- 1 c: erster Drehpunkt
- 1 d: zweiter Drehpunkt
- 1 e: Nase
- 2: Karosse
- 3: Aufstellelement
- 3 a: Unterteil
- 3 b: Hubelement
- 3 c: Nase
- 4: Fronthaube
- 4 a: Anschlagelement
- 5: erste Schenkelfeder
- 5 a: zweite Schenkelfeder
- 6: Schiebehülse
- 7: Stützarm
- 8: Schiebehebel
- 8 a, b: Haltenasen
- 8 c: Langloch
- 8 d: Haltezapfen
- 8 e: Steuerbolzen
- 9: Haubenschloß
- 9 a: Haubenschloß-Halter
- 9 b: Lagerzapfen
- 9 c: Anschlag
- 9 d: Steuerkulisse
- 9 e: linker Kulissenrand
- 9 f: höchste Kulissenkontur
- 10: Halterung
- 10 a: Einführschräge
- 10 b: Hinterschneidung
- 11: Reversierwinkel
- 11 a: Hinterschneidung
- 11 b: Einführschräge
- 12: Drucklasche
- 12 a: Öse
- 12 b: abgeknickte Kante
- 12 c: Lagerbuchse
- 13: Vorspannfeder
- 14: Zugfeder
- 15: Betätigungs-Hebel
- 15 a: Drehpunkt
- 15 b: freies Ende
- 16: Zwischenhebel
- 16 a: Drehpunkt
- 16 b: Rastbolzen
- 17: Rückstell-Hebel
- 17 a: Drehpunkt
- 17 b: Aussparung
- 18: Lagerbock
- 19: Steuerkulisse
- 20: Anschlag

## Patentansprüche

1. Einrichtung zum Reversieren der Fronthaube (4) eines Kraftfahrzeuges, die zum Schutz von Personen bei einem drohenden Frontalaufprall durch mindestens ein Aufstellelement (3) aktiv aufstellbar ist, welches ein karosseriefest angebrachtes Unterteil (3 a) und ein darin aufstellbar geführtes, mit der Fronthaube (4) in Wirkverbindung stehendes Hubelement (3 b) besitzt, das im Grundzustand mittels einer lösbaren Halte-Vorrichtung gegen die Vorspannkraft eines Federspeichers niedergehalten ist, und das im Fall eines drohenden Aufpralles durch sensorgesteuertes Lösen der Halte-Vorrichtung mittels eines Aktuators zusammen mit der Fronthaube (4) um einen vorgegebenen Arbeitshub aufstellbar ist, **dadurch gekennzeichnet, daß** die Reversiereinrichtung eine unterhalb der Fronthaube (4) angeordnete, an einem karosseriefesten Hebeldrehpunkt (1 d; 8 b, 11 a) an- und abkoppelbar angelenkte, direkt oder indirekt manuell zu betätigende, Reversierhebel-Anordnung (1; 8; 15 - 17) aufweist, welche in Wirkverbindung mit dem aufgestellten Hubelement (3 b) zum Niederdrücken des Hubelementes (3 b) in den Grundzustand bringbar ist.

2. Einrichtung nach Anspruch 1, **dadurch gekennzeichnet, daß** die Reversierhebel-Anordnung (1; 8; 15 -17) so angeordnet ist, daß sie auch unter Zuhilfenahme der Fronthaube (4) manuell reversierend betätigbar ist.

3. Einrichtung nach Anspruch 1 oder 2, **dadurch gekennzeichnet, daß** die Reversierhebel-Anordnung (1; 8; 15 - 17) zum Reversieren eines Aufstellelementes (3) zum Aufstellen der Fronthaube (4) im Bereich des Haubenschlosses (9, 9 a) ausgebildet ist.

4. Einrichtung nach Anspruch 3, **dadurch gekennzeichnet, daß** das Haubenschloß (9) direkt auf dem Hubelement (3 b) des Aufstellelementes (3) angebracht ist.

5. Einrichtung nach einem der Ansprüche 1 bis 4, **dadurch gekennzeichnet, daß** die Reversierhebel-Anordnung so ausgebildet und angeordnet ist, daß sie im Grundzustand und während des Aufstellens des Hubelementes (3 b) vom karosseriefesten Drehpunkt (1 d; 8 b, 11 a; 17 a) abgekoppelt ist, sich selbsttätig nach manuellem Öffnen der Fronthaube (4) bei aufgestelltem Hubelement (3 b) mittels Federkraft selbsttätig daran ankoppelt und nach erfolgter Reversierung in den Grundzustand wieder selbsttätig vom Drehpunkt abkoppelt.

6. Einrichtung nach einem der Ansprüche 1 bis 5, **dadurch gekennzeichnet, daß** die Reversierhebel-Anordnung als einarmiger Hebel ausgebildet ist.

7. Einrichtung nach einem der Ansprüche 1 bis 6, **dadurch gekennzeichnet, daß** die Reversierhebel-Anordnung als Knickhebel (1) mit feststellbarem Gelenk (1 c) ausgebildet ist.

8. Einrichtung nach Anspruch 7, **dadurch gekennzeichnet, daß** der Knickhebel (1) einen langgestreckten Betätigungs-Hebelteil (1 a) und einen kurzen, am Hebel-Drehpunkt (1 d) angelenkten Stütz-Hebelteil (1 b) aufweist, die beide über ein Drehgelenk (1 c) federvorgespannt miteinander verbunden sind, sowie der einen auf dem Stütz-Hebelteil (1 b) axial verschiebbar und federvorgespannt angeordneten, Arretierungsschieber (6) aufweist, mit dem beide Hebelteile (1 a, 1 b) in der Reversierphase formschlüssig unter Feststellen des Gelenks zu einem starren Reversierhebel selbsttätig verbindbar sind.

9. Einrichtung nach Anspruch 8, **dadurch gekennzeichnet, daß** am karosseriefest angebrachten Unterteil (3 a) des Aufstellelementes (3) ein Sperrglied (3 c) angebracht ist, welches in Wirkverbindung mit dem federvorgespannten Arretierungssschieber (6) steht, derart, daß im Grundzustand und während eines Aufstellvorganges des Hubelementes (3 b) das Drehgelenk (1 c) frei ist.

10. Einrichtung nach einem der Ansprüche 7 bis 9, **dadurch gekennzeichnet, daß** der Knickhebel (1) direkt an der Karosserie (2) angelenkt ist.

11. Einrichtung nach einem der Ansprüche 7 bis 9, **dadurch gekennzeichnet, daß** der Knickhebel (1) direkt an dem karosseriefesten Unterteil (3 a) des Aufstellelementes (3) angelenkt ist.

12. Einrichtung nach einem der Ansprüche 1 bis 6, **dadurch gekennzeichnet, daß** die Reversierhebel-Anordnung als axial verschiebbarer, sowie drehbar gehalterter und dabei am karosseriefesten Hebeldrehpunkt (8 b, 11 a) selbsttätig an- und abkoppelbarer Schiebehebel (8) ausgebildet ist.

13. Einrichtung nach Anspruch 12, **dadurch gekennzeichnet, daß** der Schiebehebel (8) an beiden axialen Enden jeweils eine wechselseitig einrastende Haltenase (8 a, 8 b) besitzt, mit einer ersten Haltenase (8 b) zum lösbaren Ankoppeln an dem karosseriefesten Hebel-Drehpunkt in der Reversierphase und mit einer zweiten Haltenase (8 a) für eine lösbare Verrastung mit einer karosseriefesten Halterung (10) im Grundzustand, sowie daß er ein axial sich erstreckendes Langloch (8 c) aufweist, mit dem er drehbar und mittels einer Zugfeder (14) axial verschiebbarer auf einem am Hubelement (3 b) oder an einem damit verbundenen Haubenschloß-Halter (9 a) fest angebrachten Lagerzapfen (9 b), durch eine Aufstellfeder (13) im aufstellenden Sinne vorgespannt, angelenkt ist, sowie daß er einen Steuerbolzen (8 e) für einen die axiale Verschiebung des Schiebehebels (8) steuernden Wirkeingriff mit einer im Hubelement (3 b) oder dem Haubenschloß-Halter (9 a) ausgebildeten Steuerkulisse (9 d) besitzt, derart, daß beim Aufstellen des Schiebehebels (8) nach einer Aufstellung des Hubelementes dieser selbsttätig durch die Zugfeder (14) mit seiner ersten Haltenase (8 b) am Hebel-Drehpunkt ankoppelbar und nach erfolgter Reversierung in den Grundzustand mit seiner zweiten Haltenase (8 a) in der Halterung (10) unter Entkopplung vom Hebel-Drehpunkt lösbar verrastbar ist.

14. Einrichtung nach einem der Ansprüche 1 bis 6, **dadurch gekennzeichnet, daß** die Reversier-Hebel-Anordnung aus drei einarmigen Hebelteilen besteht, einem manuell betätigbaren Betätigungs-Hebel (15), der karosseriefest angelenkt ist, einem drehbar am Betätigungs-Hebel (15) angelenkten Zwischenhebel (16), der am freien Ende einen Rastbolzen (16 b) besitzt sowie dem ein karosseriefester Anschlag (20) zugeordnet ist, und einem drehbar karosseriefest angelenkten Rückstell-Hebel (17), der in Wirkeingriff mit dem aufgestellten Hubelement (3 b) bringbar ist und eine Rast-Aussparung (17 b) für einen Rasteingriff mit dem Rastdorn (16 b) unter Bildung eines Krafteinleitungspunktes für die Reversierhebel-Anordnung besitzt.

## Claims

1. A device for reversing the bonnet (4) of a motor vehicle, which bonnet is arranged to be actively raised by at least one raising element (3) in order to protect persons in the event of an imminent head-on collision, which raising element (3) has a lower portion (3a) fixed to the car body and a lifting element (3b) that is guided in the lower portion so as to be liftable and is in operative connection with the bonnet (4) and in the basic state is held down by means of a releasable holding device against the biasing force of a stored-energy spring mechanism, and which lifting element, in the event of an imminent impact, by sensor-controlled release of the holding device is arranged to be raised, together with the bonnet (4), by means of an actuator by a preset working distance, **characterised in that** the reversing device comprises a reversing lever arrangement (1; 8; 15-17), which is arranged underneath the bonnet (4), is articulated so as to be coupled to and uncoupled from a lever pivot point (1d; 8b, 11a) fixed to the car body, and is to be directly or indirectly manually operated, which reversing lever arrangement can be brought into operative connection with the raised lifting element (3b) to press down the lifting element (3b) into the basic state.

2. A device according to claim 1, **characterised in that** the reversing lever arrangement (1; 8; 15-17) is arranged so that it is manually operable also with the assistance of the bonnet (4) to effect reversal.

3. A device according to claim 1 or 2, **characterised in that** the reversing lever arrangement (1; 8; 15-17) for reversing a raising element (3) for raising the bonnet (4) is constructed in the region of the bonnet lock (9, 9a).

4. A device according to claim 3, **characterised in that** the bonnet lock (9) is mounted directly on the lifting element (3b) of the raising element (3).

5. A device according to any one of claims 1 to 4, **characterised in that** the reversing lever arrangement is constructed and arranged so that in the basic state and as the lifting element (3b) is being raised it is uncoupled from the pivot point (1d; 8b; 11a, 17a) fixed to the car body, after manual opening of the bonnet (4) with the lifting element (3b) raised it automatically couples to the pivot point by means of spring force and, after reversal into the basic state has been effected, automatically uncouples from the pivot point again.

6. A device according to any one of claims 1 to 5, **characterised in that** the reversing lever arrangement is in the form of a single-armed lever.

7. A device according to any one of claims 1 to 6, **characterised in that** the reversing lever arrangement is in the form of a toggle lever (1) with a lockable joint (1c).

8. A device according to claim 7, **characterised in that** the toggle lever (1) comprises an elongate operating lever portion (1a) and a short supporting lever portion (1b) articulated at the lever pivot point (1d), both portions being connected with one another under spring bias by way of a pivot joint (1c), and which toggle lever comprises a locking slide (6) arranged under spring bias and so as to slide axially on the supporting lever portion (1b), which locking slide automatically and positively connects the two lever portions (1a, 1b) in the reversing phase to lock the joint to produce a rigid reversing lever.

9. A device according to claim 8, **characterised in that** a locking element (3c) is mounted on the lower portion (3a) of the raising element (3) fixed to the car body, which locking element is in operative connection with the spring-biased locking slide (6) in such a manner that in the basic state and during a raising operation of the lifting element (3b) the pivot joint (1c) is free.

10. A device according to any one of claims 7 to 9, **characterised in that** the toggle lever (1) is articulated directly at the car body (2).

11. A device according to any one of claims 7 to 9, **characterised in that** the toggle lever (1) is articulated directly at the lower portion (3a) of the raising element (3) fixed to the car body.

12. A device according to any one of claims 1 to 6, **characterised in that** the reversing lever arrangement is in the form of an axially displaceable sliding lever (8) that is rotatably mounted and at the same time automatically couplable to and uncouplable from the lever pivot point (8b, 11a) fixed to the car body.

13. A device according to claim 12, **characterised in that** the sliding lever (8) has at each axial end a respective alternately engaging retaining projection (8a, 8b), having a first retaining projection (8b) for releasable coupling in the reversing phase to the lever pivot point fixed to the car body and having a second retaining projection (8a) for a releasable locking in the basic state with a support (10) fixed to the car body, and **in that** the sliding lever has an axially extending slot (8c), by means of which it is articulated so as to rotate on, and by means of a tension spring (14) so as to be axially slidable on, a bearing stud (9b) fixedly mounted on the lifting element (3b) or on a bonnet lock support (9a) connected thereto, and is biased by a raising spring (13) in the raising direction, and **in that** the sliding lever possesses a control bolt (8e) for operative engagement, controlling the axial displacement of the sliding-lever (8), with a slotted control link (9d) constructed in the lifting element (3b) or in the bonnet lock support (9a), such that, as the sliding lever (8) is raised after raising of the lifting element, the former is automatically couplable to the lever pivot point, by virtue of the tension spring (14), by means of its first retaining projection (8b), and after completed reversal is lockable in the basic state in the support (10) by means of its second retaining projection (8a), simultaneously becoming disengaged from the lever pivot point.

14. A device according to any one of claims 1 to 6, **characterised in that** the reversing lever arrangement comprises three single-armed lever portions, a manually operable actuating lever (15), which is articulated at the car body, a intermediate lever (16), which is rotatably coupled to the actuating lever (15), has a locking pin (16b) at its free end and is associated with a stop (20) fixed to the car body, and a restoring lever (17) rotatably articulated at the car body, which restoring lever is arranged to be brought into operative engagement with the raised lifting element (3b) and has a locking recess (17b) for locking engagement with the locking pin (16b) to form a force-transmission point for the reversing lever arrangement.

## Revendications

1. Dispositif pour renverser le capot avant (4) d'un véhicule automobile qui peut être soulevé activement, pour la protection des personnes lors d'une menace de collision frontale, par au moins un élément de soulèvement (3) qui possède une partie inférieure (3a) fixée à la carrosserie et un élément de levage (3b) guidé avec possibilité de relevage dans ladite partie et fonctionnellement relié au capot avant (4), l'élément de levage étant dans l'état de base maintenu enfoncé contre la force de précontrainte d'un accumulateur à ressort au moyen d'un dispositif de retenue libérable et pouvant, en cas de menace de collision, par la libération commandée par capteur du dispositif de retenue, être au moyen d'un actionneur relevé conjointement avec le capot avant (4) d'une course de travail prédéfinie, **caractérisé en ce que** le dispositif de renversement présente un ensemble de levier de renversement (1 ; 8 ; 15-17) qui est disposé sous le capot avant (4), est articulé avec possibilité d'accouplement et de désaccouplement à un pivot de levier (1d ; 8b, 11a) fixé à la carrosserie et peut être actionné manuellement de manière directe ou indirecte, ledit ensemble de levier pouvant être amené en liaison fonctionnelle avec l'élément de levage relevé (3b) afin d'enfoncer l'élément de levage (3b) dans l'état de base.

2. Dispositif selon la revendication 1, **caractérisé en ce que** l'ensemble de levier de renversement (1 ; 8 ; 15-17) est disposé de telle sorte qu'il peut être actionné manuellement pour le renversement en s'aidant également du capot avant (4).

3. Dispositif selon la revendication 1 ou 2, **caractérisé en ce que** l'ensemble de levier de renversement (1 ; 8 ; 15-17) est conçu pour renverser un élément de soulèvement (3) destiné à soulever le capot avant (4) dans la région de la serrure de capot (9, 9a).

4. Dispositif selon la revendication 3, **caractérisé en ce que** la serrure de capot (9) est directement montée sur l'élément de levage (3b) de l'élément de soulèvement (3).

5. Dispositif selon l'une quelconque des revendications 1 à 4, **caractérisé en ce que** l'ensemble de levier de renversement est conçu et disposé de telle sorte qu'il est désaccouplé du pivot de levier (1d ; 8b, 11a ; 17a) fixé à la carrosserie dans l'état de base et pendant le relevage de l'élément de levage (3b), qu'il s'y accouple automatiquement par force de ressort à la suite de l'ouverture manuelle du capot avant (4), l'élément de levage (3b) étant relevé, et qu'il se désaccouple à nouveau automatiquement du pivot de levier une fois effectué le renversement dans l'état de base.

6. Dispositif selon l'une quelconque des revendications 1 à 5, **caractérisé en ce que** l'ensemble de levier de renversement est réalisé sous forme de levier monobras.

7. Dispositif selon l'une quelconque des revendications 1 à 6, **caractérisé en ce que** l'ensemble de levier de renversement est réalisé sous forme de levier articulé (1) dont l'articulation (1c) peut être bloquée.

8. Dispositif selon la revendication 7, **caractérisé en ce que** le levier articulé (1) présente une partie de levier d'actionnement oblongue (1a) et une partie de levier de soutien courte (1b), articulée au pivot de levier (1d), les deux parties de levier étant mutuellement reliées sous précontrainte de ressort par l'intermédiaire d'une articulation tournante (1c), et présente un coulisseau d'arrêt (6) disposé à coulissement axial et sous précontrainte de ressort sur la partie de levier de soutien (1b), par lequel les deux parties de levier (1a, 1b) peuvent être, dans la phase de renversement, automatiquement reliées par engagement positif en un levier rigide de renversement, en bloquant l'articulation.

9. Dispositif selon la revendication 8, **caractérisé en ce qu'**un organe de verrouillage (3c) est installé sur la partie inférieure (3a), fixée à la carrosserie, de l'élément de soulèvement (3), organe qui se trouve en liaison fonctionnelle avec le coulisseau d'arrêt (6) précontraint par ressort de telle sorte que l'articulation tournante (1c) est libre dans l'état de base et pendant un processus de relevage de l'élément de levage (3b).

10. Dispositif selon l'une quelconque des revendications 7 à 9, **caractérisé en ce que** le levier articulé (1) est directement articulé sur la carrosserie (2).

11. Dispositif selon l'une quelconque des revendications 7 à 9, **caractérisé en ce que** le levier articulé (1) est directement articulé sur la partie inférieure (3a), fixée à la carrosserie, de l'élément de soulèvement (3).

12. Dispositif selon l'une quelconque des revendications 1 à 6, **caractérisé en ce que** l'ensemble de levier de renversement est réalisé sous forme de levier coulissant (8) mobile en translation axiale et monté à rotation en pouvant ce faisant être automatiquement accouplé à et désaccouplé du pivot de levier (8b, 11a) fixé à la carrosserie.

13. Dispositif selon la revendication 12, **caractérisé en ce que** le levier coulissant (8) possède aux deux extrémités axiales un ergot de retenue respectif (8a, 8b) s'enclenchant alternativement, avec un premier ergot de retenue (8b) pour l'accouplement libérable au pivot de levier fixé à la carrosserie dans la phase de renversement et avec un deuxième ergot de retenue (8a) pour un assemblage par enclenchement libérable à un support (10) fixé à la carrosserie dans l'état de base, et **en ce qu'**il présente un trou oblong (8c) s'étendant axialement par lequel il est articulé, à rotation et à translation axiale au moyen d'un ressort de traction (14), et en étant précontraint par un ressort de soulèvement (13) dans le sens de soulèvement, sur un tourillon (9b) fixement installé sur l'élément de levage (3b) ou sur un support (9a) de serrure de capot relié à cet élément, et **en ce qu'**il possède un goujon de commande (8e) pour un engagement actif, commandant la translation axiale du levier coulissant (8), avec une coulisse de commande (9d) configurée dans l'élément de levage (3b) ou dans le support (9a) de serrure de capot, de telle sorte que, lors du relevage du levier coulissant (8) à la suite d'un relevage de l'élément de levage, ce levier peut être automatiquement accouplé, par le ressort de traction (14), au pivot de levier par son premier ergot de retenue (8b), et qu'une fois effectué le renversement dans l'état de base, il peut être assemblé par enclenchement libérable dans le support (10) par son deuxième ergot de retenue (8a), en se désaccouplant du pivot de levier.

14. Dispositif selon l'une quelconque des revendications 1 à 6, **caractérisé en ce que** l'ensemble de levier de renversement est constitué de trois parties formant des leviers monobras, à savoir un levier d'actionnement (15) pouvant être actionné manuellement qui est articulé à la carrosserie, un levier intermédiaire (16) qui est articulé à rotation au levier d'actionnement (15), qui possède à l'extrémité libre un goujon de crantage (16b) et auquel est associée une butée (20) fixée à la carrosserie, et un levier de rappel (17) qui est articulé à rotation à la carrosserie, qui peut être amené en engagement actif avec l'élément de soulèvement relevé (3b) et qui possède un évidement de crantage (17b) pour un engagement par crantage avec le goujon de crantage (16b) en formant un point d'introduction de force pour l'ensemble de levier de renversement.
